# FASCICULE DE BREVET EUROPEEN

(11) **EP 2 166 371 B1**
(45) Date de publication et mention de la délivrance du brevet: **24.02.2016**
(21) Numéro de dépôt: 09167485.3
(22) Date de dépôt: 07.08.2009
(51) Int. Cl.: G01S 7/02, G01S 3/74, G01S 3/48

(54) **Dispositif et procédé de dénombrement d'émetteurs électromagnétiques**
Vorrichtung und Verfahren zum Zählen von elektromagnetischen Sendern
Device and method for identifying the number of electromagnetic transmitters

(30) Priorité: 19.09.2008 FR 0805155
(43) Date de publication de la demande: 24.03.2010
(73) Titulaire: Thales, 92200 Neuilly Sur Seine (FR)
(72) Inventeur: Boutry, Gilles, 95280, JOUY LE MOUTIER (FR)
(74) Mandataire: Lucas, Laurent Jacques

(56) Documents cités:
- WO-A-2005/116681
- US-B1- 6 498 581
- ABOU-BAKR HASSAN H E ET AL: "Joint deinterleaving / recognition of radar pulses" CCECE 2003. CANADIAN CONFERENCE ON ELECTRICAL AND COMPUTER ENGINEERING . MONTREAL, CANADA, MAY 4 - 7, 2003; [CANADIAN CONFERENCE ON ELECTRICAL AND COMPUTER ENGINEERING], NEW YORK, NY : IEEE, US, vol. 3, 4 mai 2003 (2003-05-04), pages 2009-2014, XP010653963 ISBN: 978-0-7803-7781-3
- MILOJEVIC D J ET AL: "IMPROVED ALGORITHM FOR THE DEINTERLEAVING OF RADAR PULSES" IEE PROCEEDINGS F. COMMUNICATIONS, RADAR & SIGNALPROCESSING, INSTITUTION OF ELECTRICAL ENGINEERS. STEVENAGE, GB, vol. 139, no. 1 PART F, 1 février 1992 (1992-02-01), pages 98-104, XP000257895 ISSN: 0956-375X

## Description

L'invention concerne un dispositif radioélectrique et un procédé pour la mise en oeuvre du dispositif destiné à effectuer un dénombrement d'émetteurs d'ondes électromagnétiques.

Les dispositifs de dénombrement d'émetteurs de l'état de l'art comportent des récepteurs de détection radioélectrique fournissant à partir des signaux émis par les émetteurs à détecter et reçus par des antennes du récepteur, une identification, et, au minimum, la direction de tous les émetteurs qui éclairent le récepteur.

Les émetteurs peuvent être en mouvement par rapport au récepteur de détection, c'est le cas par exemple des radars d'un groupe d'aéronefs se dirigeant de façon groupée vers une cible.

Il est important de déterminer, même approximativement, le nombre d'émetteurs d'un groupe d'émetteurs alors qu'ils ne sont pas séparables en direction par goniométrie, c'est par exemple le cas, lorsqu'ils se trouvent à une distance trop importante de la cible.

Le nombre d'émetteurs du groupe peut être aussi déterminé par une discrimination à partir des paramètres des émissions tels que, la forme de l'onde émise par chaque émetteur, la fréquence d'émission, le balayage, ou à partir de plusieurs de ces paramètres à la fois. Mais, lorsqu'aucun de ces paramètres ne permet pas une discrimination des émissions, elles sont attribuées à un même émetteur.

En pratique, lorsque des radars identiques d'un groupe d'aéronefs n'éclairent pas le récepteur de détection simultanément (même forme d'onde perçue), qu'ils sont dans une même direction, l'identification par le récepteur de détection permettant de déterminer qu'ils sont agiles en fréquence et que les intervalles entre les éclairements représentent un balayage possible, dans ces conditions, il est impossible de déterminer qu'il y a plusieurs radars. Ce cas se présente notamment dans les dispositifs de détection aéroportés lorsqu'un un groupe d'aéronefs portant des radars de même modèle et fonctionnant dans le même mode sont en approche à grande distance.

Les paramètres électromagnétiques des ondes reçues par les dispositifs de dénombrement de l'état de l'art ne permettent pas toujours de discriminer les émetteurs (les radars), la conséquence est une indétermination du nombre d'aéronefs. Il faut donc attendre qu'une séparation angulaire soit suffisante à la discrimination par goniométrie, soit par une réduction de la distance du groupe d'émetteurs au dispositif de dénombrement, soit par une manoeuvre adverse, ou par un changement dans les formes d'ondes à l'initiative du groupe d'aéronefs adverse. Or la connaissance du dispositif adverse est indispensable pour prendre une éventuelle décision d'engagement. Une connaissance, au plus tôt, du nombre d'aéronefs adverses est nécessaire.

Cette problématique de dénombrement d'émetteurs est aussi applicable à d'autres cas comme les radars au sol ou les radiocommunications.

Dans l'état de l'art, la discrimination d'émetteurs groupés ne peut pas être effectuée tant qu'il n'y a pas un critère observé, par exemple, séparation en direction par la goniométrie, simultanéité d'éclairement. Pour des émetteurs groupés à grande distance et en éclairement discontinu, les conditions rendant une discrimination possible des émetteurs ne sont que très rarement remplies.

Un document ABOU-BAKR HASSAN et al : « joint deinterleaving / récognition of radar pulses »,

Canadian conference of electrical and computer engineering, IEEE, US, vol. 3, 4 mai 2003 décrit un dispositif radioélectrique de dénombrement d'émetteurs électromagnétiques.

Pour pallier les inconvénients des dispositifs de détection de l'état de l'art, l'invention propose un dispositif radioélectrique de dénombrement d'émetteurs électromagnétiques tel que décrit par les revendications.

L'invention concerne aussi un procédé de dénombrement d'un groupe d'émetteurs électromagnétiques par un dispositif radioélectrique de dénombrement d'émetteurs électromagnétiques, selon le procédé décrit précédemment.

La solution proposée par le dispositif de dénombrement d'émetteurs d'un groupe d'émetteurs et le procédé pour la mise en ouvre du dispositif selon l'invention consiste à effectuer des goniométries des sources d'émission avec une très forte résolution (dite aussi super-résolution), mais aussi très fortement ambiguës et non étalonnées,

Ces goniométries super-résolues ne sont pas utilisables pour déterminer la direction des sources, mais, utilisées avec le procédé selon l'invention, fournissent des informations représentatives du nombre des sources d'émission.

Le dénombrement des sources d'émission, ou des émetteurs, s'appuyant sur une discrimination par une très forte résolution angulaire, permet de séparer la notion de discrimination angulaire des sources pour le dénombrement de la notion de discrimination par les paramètres caractéristiques des sources.

L'invention sera mieux comprise à l'aide d'exemples de réalisation en référence aux dessins indexés dans lesquels :
- la figure 1 représente un schéma synoptique simplifié d'un dispositif de dénombrement d'émetteurs d'un groupe d'émetteurs, selon l'invention;
- la figure 2a montre le dispositif de dénombrement de la figure 1
- la figure 2b montre un détail de la figure 2a représentant deux des antennes de réception ;
- la figure 2c montre les respectives différences de marche des signaux arrivant sur les deux antennes du dispositif de la figure 2a ;
- la figure 3a montre la position d'un porteur comportant des antennes de réception et d'un seul émetteur dans un plan;
- la figure 3b montre le déphasage instantané des signaux reçus par les antennes du porteur de la figure 3a ;
- la figure 4a montre la position d'un porteur comportant des antennes de réception et de deux émetteurs dans un plan;
- la figure 4b montre le déphasage instantané des signaux reçus par les antennes du porteur de la figure 4a ;
- la figure 5a montre la position d'un porteur comportant des antennes de réception et de trois émetteurs dans un plan et ;
- la figure 5b montre le déphasage instantané des signaux reçus par les antennes du porteur de la figure 5a.

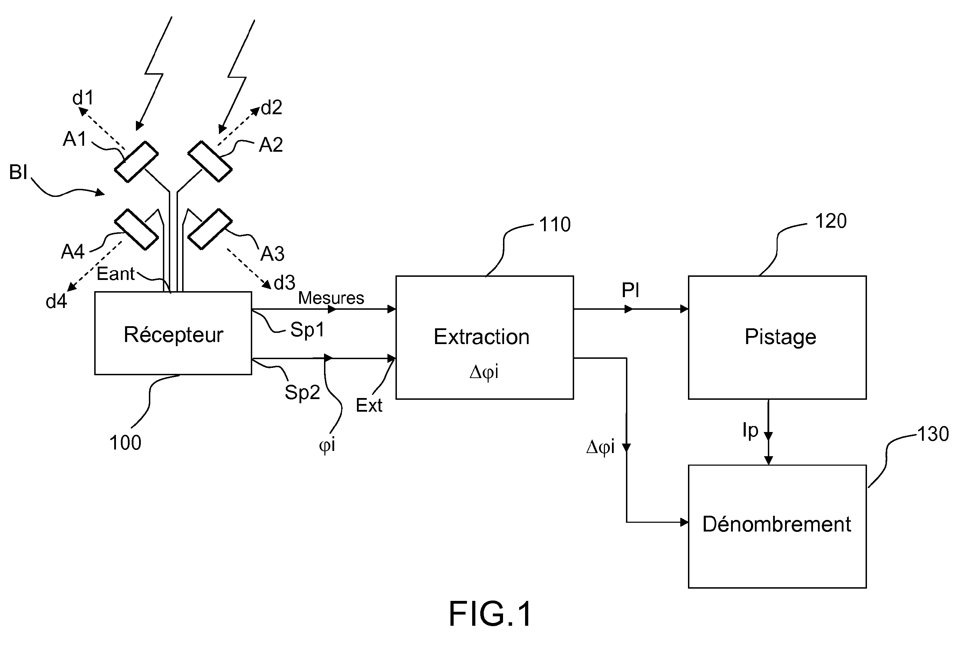

La figure 1 représente un schéma synoptique simplifié d'un dispositif de dénombrement d'émetteurs d'un groupe d'émetteurs, selon l'invention. Par exemple un groupe d'aéronefs se dirigeant, à grande distance vers une cible. Les émetteurs sont dans ce cas particulier les radars des aéronefs.

Les radars des aéronefs émettent des trains d'impulsions de durée variable à des fréquences qui peuvent aussi varier dans le temps. On dit que les radars sont agiles en fréquence. La modulation, la durée des impulsions, leur répétition, le type de balayage font partie des caractéristiques principales de tels émetteurs électromagnétiques.

Le dispositif de dénombrement de la figure 1 comporte, dans cet exemple de réalisation, un base d'interférométrie BI ayant quatre antennes directives A1, A2, A3, A4 dirigées dans des respectives directions d1, d2, d3, d4 de façon réaliser une couverture angulaire de réception de signaux radioélectriques dans un angle total de surveillance de 360°.

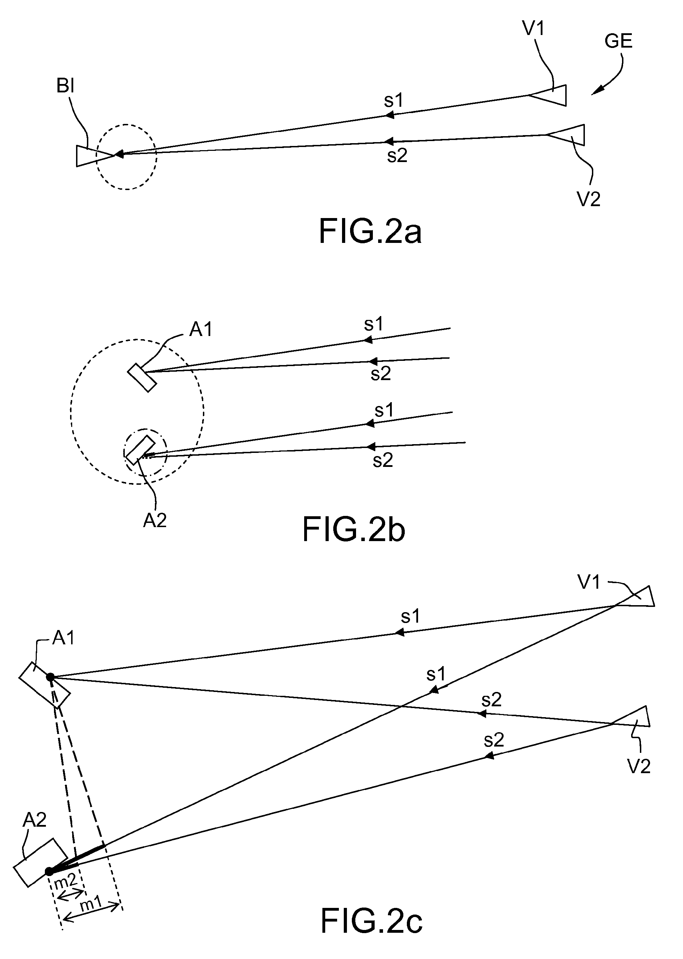

La figure 2a montre le dispositif de dénombrement de la figure 1 recevant des signaux, sous forme de trains d'impulsions émis par les radars d'un groupe GE de deux aéronefs V1, V2.

Un premier signal s1 est émis par le radar de l'aéronef V1 et un second signal s2 est émis par le radar de l'aéronef V2 vers le dispositif de dénombrement représentant, par exemple, la cible du groupe GE d'aéronefs.

La figure 2b montre un détail de la figure 2a représentant deux A1, A2 des antennes de réception de la base d'interférométrie BI dirigées vers le groupe d'aéronefs. Les deux antennes choisies par le récepteur pour recevoir au mieux les signaux des émetteurs sont désignées par le terme d'antennes majoritaires.

Chacune des deux antennes A1 et A2 reçoit, à deux instants donnés t1 et t2, les deux signaux émis s1, s2 mais avec des respectives différences de marche m1, m2 liées à la géométrie de l'ensemble formé, à ces instants donnés, par les positions des aéronefs V1 et V2 et les antennes de réception.

La figure 2c montre les respectives différences de marche m1, m2 des signaux s1, s2 arrivant sur les deux antennes A1, A2 du dispositif de la figure 2a.

Le dispositif de dénombrement selon l'invention comporte, outre la base interférométrique formée par les quatre antennes directives A1, A2, A3, A4 (voir figure 1), un récepteur radioélectrique 100 de goniométrie recevant par des entrées d'antennes Eant les signaux captés par les antennes de réception A1, A2, A3 et A4.

Le récepteur 100 fournit par une sortie Sp1, des mesures des paramètres primaires des signaux reçus tels que le niveau du signal, la fréquence, la modulation, la direction, ou tout autre paramètre caractéristique des émissions des émetteurs du groupe. Le récepteur 100 fournit, en outre, à une autre sortie de mesure de phase Sp2, des signaux de mesure de phase instantanée ϕi de chacun des signaux reçus.

Un dispositif d'extraction 110 comporte une première entrée Ext recevant les signaux de mesures de phase instantanées ϕi du récepteur radioélectrique 100 à sa sortie de mesure de phase Sp2.

Dans cette réalisation, le dispositif d'extraction 110 comporte des moyens de calcul pour calculer le déphasage instantané Δϕi entre les signaux reçus par chacune des antennes de la base goniométrique, à partir des mesures des phases instantanées ϕi desdits signaux reçus fournies par le récepteur radioélectrique 100.

Dans cet exemple, le dispositif d'extraction calcule le déphasage instantané Δϕi à partir des mesures de phase instantanée ϕi des signaux reçus par les deux antennes A1, A2 sélectionnées comme antennes majoritaires.

Le dispositif d'extraction 110 a comme principales fonctions, d'une part, de ranger les signaux reçus par plots de mesures des signaux (ou des émissions) effectuées à des instants donnés, ces mesures évoluant dans le temps, et qui appartiennent au même train de signaux ou au même éclairement et, d'autre part, selon une principale caractéristique de l'invention d'ajouter au plot de mesure un attribut de déphasage instantané Δϕi.

Le dispositif d'extraction fournit, en plus des plots de mesure PI, une information supplémentaire de déphasage à l'instant de mesure sous la forme de plots de déphasage instantané Δϕi.

Les émissions sont discriminées par le dispositif de dénombrement par les paramètres caractéristiques des émissions tels que le niveau du signal, la fréquence F, la modulation, la direction, ou autres paramètres caractéristiques des signaux émis par les émetteurs.

Le dispositif de dénombrement comporte un dispositif de pistage 120 fournissant des pistes correspondant aux émissions pouvant être séparées ou discriminées. La piste est définie comme étant l'objet final qui intéresse un opérateur du dispositif de dénombrement.

La fonction du dispositif de pistage 120 est de réaliser un suivi du dénombrement d'émetteurs dans le temps à partir des plots de mesure PI fournis par le dispositif d'extraction 110.

Dans certaines configurations, le dispositif d'extraction 110 ne peut pas discriminer ou séparer les émissions et le dispositif de pistage 120 crée et entretien une seule piste Ip, à partir des plots de mesure PI fournis par le dispositif d'extraction 110, pour les émissions non discriminées.

Un niveau de déphasage instantané Δϕi évoluant lentement dans le temps, en relation avec les vitesses de déplacement des émetteurs et du porteur, peut être considérée, a priori, comme un élément représentatif d'un émetteur du groupe.

A cet effet le dispositif de dénombrement comporte en outre, selon une principale caractéristique de l'invention, un module de dénombrement 130 supplémentaire configuré pour analyser la répartition et les évolutions des déphasages instantanés Δϕi fournis par le dispositif d'extraction 110 sous forme de plots de déphasage et, à partir des plots de mesure constituant la piste unique Ip et l'évolution dans le temps des dits déphasages instantanés (Δϕi), déterminer l'unicité, le dénombrement ou le caractère indénombrable des émissions.

Nous allons par la suite montrer l'évolution en fonction du temps des plots de déphasage instantané destinés à être associées aux plots de mesures aidant au dénombrement des sources d'émission n'ayant pas pu être discriminées par le dispositif d'extraction à partir des seuls plots de mesure.

Dans un exemple de configuration, on considère que le dispositif de dénombrement se trouve sur un porteur P aéronautique comportant deux antennes distantes de 1 m formant la base interférométrique.

Les antennes du porteur reçoivent des éclairements d'un ou plusieurs émetteurs d'un groupe d'émetteurs distants du porteur de 100Km.

La fréquence F d'émission des émetteurs est de 10GHz avec 8% d'agilité en fréquence.

Le bruit de la mesure du déphasage par le récepteur du dispositif de dénombrement est de 10°.

### A) Cas d'un seul émetteur (une seule émission vers le porteur):

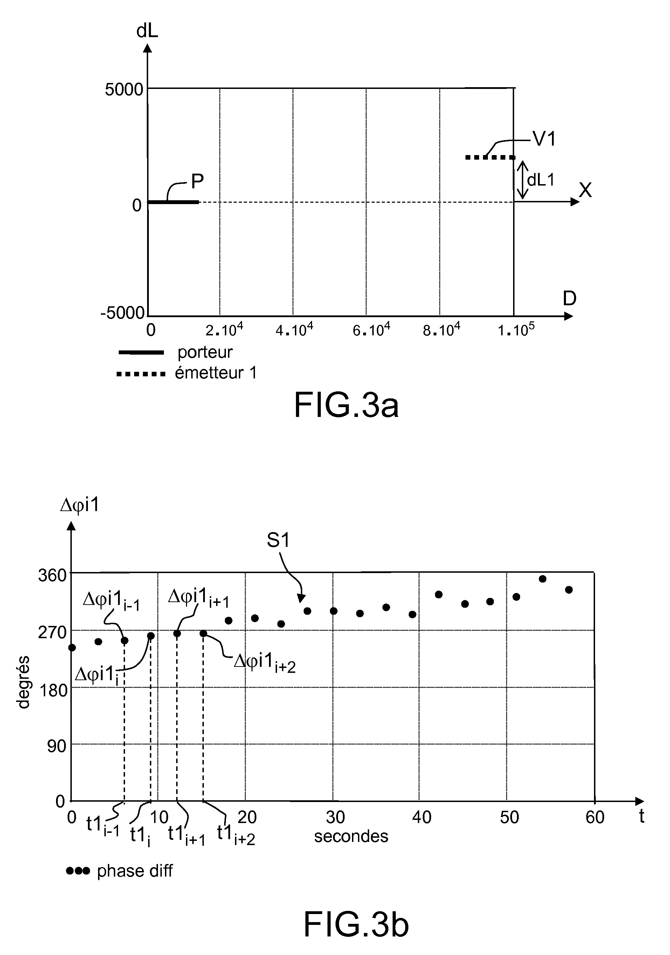

La figure 3a montre la position d'un porteur P comportant des antennes de réception et d'un seul émetteur V1 dans un plan.

La figure 3b montre le déphasage instantané des signaux reçus par les antennes du porteur de la figure 3a.

La figure 3a représente selon deux axes perpendiculaires, en abscisses, la distance D entre l'émetteur V1 et le porteur P et en ordonnées le décalage latéral dL1 de l'émetteur V1 par rapport à une direction principale X des antennes majoritaire. Une émission selon cette direction X ne produit pas de différence de marche sur les deux antennes majoritaires de la base d'interférométrie. Dans l'exemple de la figure 3a le décalage latéral est d'environ 2000m. Le porteur P comporte le dispositif de dénombrement selon l'invention.

La figure 3b représente selon deux axes perpendiculaires, en ordonnées la valeur du déphasage instantané Δϕi1 en fonction du temps t en abscisses, mesurée par le récepteur du porteur P.

Le déphasage instantané Δϕi1 résulte de la différence de marche du signal émis par l'émetteur V1 capté par les deux antennes majoritaires de la base d'interférométrie du porteur P.

La figure 3a montre une suite S1 de points de mesures de déphasages instantanés....Δϕi1ⱼ₋₁, Δϕi1ᵢ, Δϕi1ᵢ₊₁, Δϕi1ᵢ₊₂,....aux respectifs temps des mesures ....t1ᵢ₋₁, t1ᵢ, t1ᵢ₊₁, t1ᵢ₊₂, .... Les valeurs des déphasages instantanés dérivent lentement dans le temps (dans cet exemple s'accroissant) du fait du déplacement de l'émetteur V1 et du porteur P. Les points de mesures de déphasage instantané Δϕi ont été aussi désignés par plots de déphasage instantané.

### B) Cas d'un groupe de deux émetteurs :

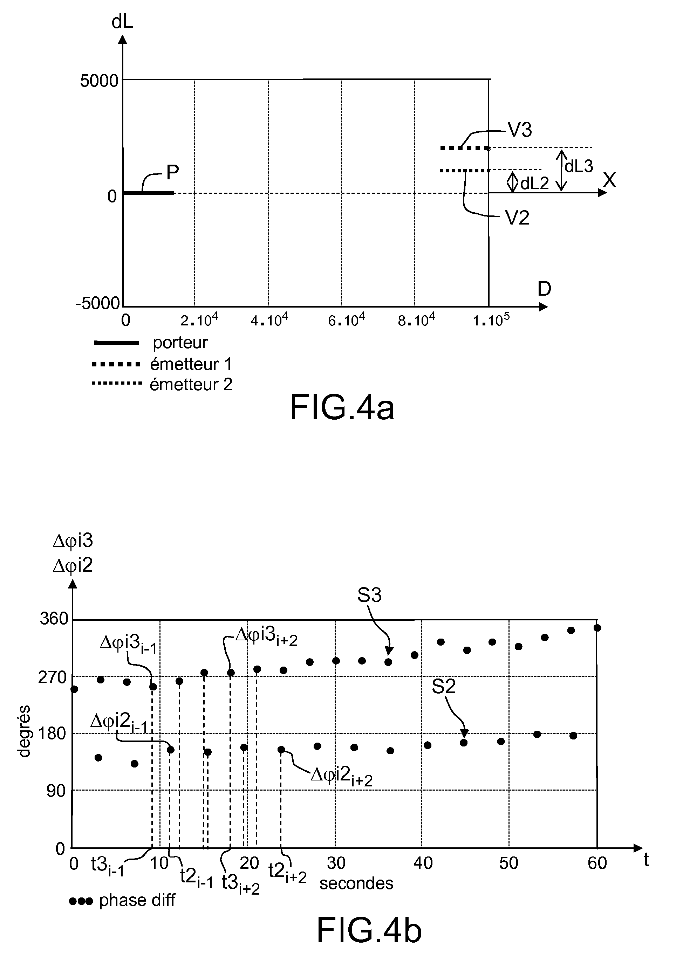

La figure 4a montre la position d'un porteur P comportant des antennes de réception et de deux émetteurs V2, V3 dans un plan.

La figure 4b montre le déphasage instantané des signaux reçus par les antennes du porteur de la figure 4a.

La figure 4a représente comme sur la figure 3a selon deux axes perpendiculaires, en abscisses, la distance D entre les émetteurs V2, V3 et le porteur P et en ordonnées les respectifs décalages latéraux dL2, dL3 des deux émetteurs V2, V3 par rapport à la direction principale X des antennes majoritaires.

Dans l'exemple de la figure 4a les deux émetteurs V2, V3 sont séparés de 1000m.

La figure 4b représente, comme dans la figure 3b, selon deux axes perpendiculaires, en ordonnées les valeurs des respectifs déphasages instantanés Δϕ2 et Δϕi3 en fonction du temps t en abscisses, mesurés par le récepteur du porteur P sur les respectifs signaux reçus par les antennes du porteur P.

La figure 4b montre deux suites S2 et S3 de points de mesures de déphasages :
....Δϕi2ᵢ₋₁, Δϕi2ᵢ, Δϕi2ᵢ₊₂, Δϕi2ᵢ₊₂ .... aux respectifs temps de mesures ....t2ᵢ₋₁, t2ᵢ, t2ᵢ₊₁, t2ᵢ₊₂ et
...Δϕi3ᵢ₋₁, Δϕi3ᵢ, Δϕ3ᵢ₊₁, Δϕi3ᵢ₊₂... aux respectifs temps de mesures....t3ᵢ₋₁, t3ᵢ, t3ᵢ₊₁, t3ᵢ₊₂,....

Ces deux suites S1, S2 indiquent la présence de deux sources différentes d'émission soit, dans ces cas, de deux émetteurs.

Comme dans le cas de la figure 3b, les valeurs des déphasages instantanés des deux suites S1 et S2 dérivent lentement dans le temps (dans cet exemple s'accroissant) du fait du déplacement des deux émetteurs et du porteur.

### C) Cas d'un groupe de trois émetteurs:

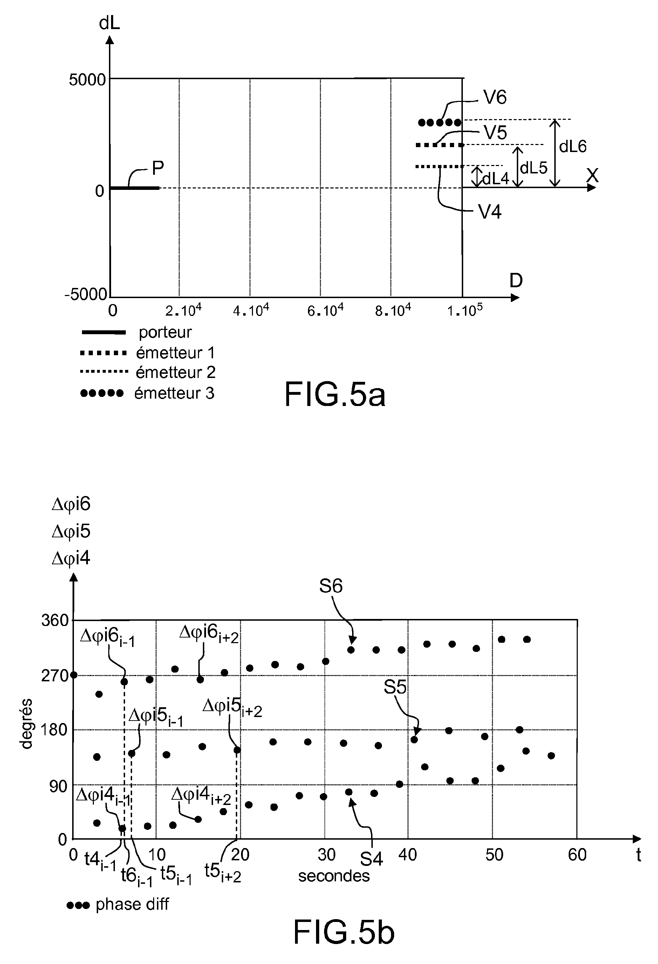

La figure 5a montre la position d'un porteur P comportant des antennes de réception et de trois émetteurs V4, V5, V6 dans un plan.

La figure 5b montre le déphasage instantané des signaux reçus par les antennes du porteur de la figure 5a.

La figure 5a représente comme sur les figures 3a et 4a selon deux axes perpendiculaires, en abscisses, la distance D entre les émetteurs V4, V5, V6 et le porteur P et en ordonnées les respectifs décalages latéraux dL4, dL5, dL6 des trois émetteurs V4, V5, V6 par rapport à la direction principale X des antennes majoritaires.

Dans l'exemple de la figure 5a les trois émetteurs V4, V5, V6 sont séparés entre eux de 1000m.

La figure 5b représente, comme dans les figures 3b et 4b, selon deux axes perpendiculaires, en ordonnées les valeurs des respectifs déphasages instantanés Δϕi4, Δϕi5, Δϕi6 en fonction du temps t en abscisses, mesurés par le récepteur du porteur P sur les respectifs signaux reçus par les antennes du porteur P.

La figure 5b se traduit par trois suites S4, S5 et S6 de points de mesure de déphasages :
....Δϕi4ᵢ₋₁, Δϕi4ᵢ, Δϕi4ᵢ₊₁,Δϕi4ᵢ₊₂,... aux respectifs temps de mesure....t4ᵢ₋₁, t4ᵢ, t4ᵢ₊₁, t4ᵢ₊₂
.....Δϕi5ᵢ₋₁, Δϕi5ᵢ, Δϕi5ᵢ₊₁, Δϕi5ᵢ₊₂ .... aux respectifs temps de mesure ....t5ᵢ₋₁, t5ᵢ, t5ᵢ₊₁, t₅ᵢ₊₂
...Δϕi6ᵢ₋₁, Δϕi6ᵢ, Δϕi6ᵢ₊₁, Δϕi6ᵢ₊₂ .... aux respectifs temps de mesures ....t6ᵢ₋₁, t6ᵢ, t6ᵢ₊₁, t6ᵢ₊₂

Ces trois suites indiquent la présence de trois sources d'émission soit, dans ces cas, de trois émetteurs.

Comme dans le cas de la figure 3b et 4b, les valeurs des déphasages instantanés des trois suites S4, S5 et S6 dérivent lentement dans le temps (dans cet exemple s'accroissant) du fait du déplacement des deux émetteurs et du porteur.

L'avantage principale du dispositif de dénombrement selon l'invention est d'utiliser un critère de discrimination géométrique et non pas comme dans les dispositifs de détection de l'état de l'art, des critères électromagnétiques de discrimination. Par conséquent le dispositif de dénombrement selon l'invention permet de fournir une information sur le nombre d'émetteurs du groupe d'émetteurs sans qu'il soit nécessaire de connaître à priori le fonctionnement électromagnétique des émetteurs.

Un autre avantage est que le dispositif de détection utilise les antennes habituelles du dispositif goniométrique de l'état de l'art donc sans antennes supplémentaires.

Le dispositif de dénombrement selon l'invention permet de déterminer, même approximativement, le nombre d'émetteurs d'un groupe alors qu'ils ne sont pas séparables par la mesure de direction, tout en restant à grande distance. Et notamment lorsque les émetteurs sont:
- de même type,
- en éclairement discontinu, éventuellement de motifs différents,
- agiles en fréquence,
- dans la même direction, selon la précision de mesure du récepteur,
- trop loin pour percevoir les diffus, selon la sensibilité du récepteur.

## Revendications

1. Dispositif radioélectrique de dénombrement d'émetteurs (V1, V2, V3, V4, V5, V6) électromagnétiques comportant :
- au moins deux antennes de réception (A1, A2, A3, A4) distantes formant une base interférométrique (BI) pour capter des signaux (s1, s2) émis par les émetteurs sous forme de trains de signaux,
- un récepteur radioélectrique (100) de goniométrie fournissant:
des mesures des paramètres primaires caractéristiques des signaux émis par les émetteurs, les dits paramètres primaires des signaux reçus étant choisis parmi le niveau du signal, la fréquence F, la modulation ou la direction,
des mesures de phase instantanée (ϕi) des signaux reçus par chacune des antennes de la base interférométrique,
- un dispositif d'extraction (110) regroupant sous forme de plots de mesure, des émissions discriminées par leurs paramètres primaires et présentant une même caractéristique, et les émissions non discriminées,
- un dispositif de pistage des émissions des émetteurs fournissant, à partir des plots de mesure du dispositif d'extraction, des pistes correspondant aux émissions discriminées et une piste unique pour les émissions non discriminées,
**caractérisé en ce qu'**il comporte en outre:
- des moyens de calcul des déphasages instantanés (Δϕi) entre les signaux reçus par chacune des antennes de la base interférométrique à partir des mesures des phases instantanées (ϕi) fournies par le récepteur radioélectrique (100),
- des moyens de discrimination des émissions non discriminées, à partir des plots de mesure constituant la piste unique (Ip) et de l'évolution dans le temps desdits déphasages instantanés (Δϕi), les moyens de discrimination des émissions non discriminées comportant un module de dénombrement (130) configuré pour analyser la répartition et les évolutions des déphasages instantanés (Δϕi) fournis par le dispositif d'extraction (110) sous forme de plots de déphasage et, à partir des plots de mesure constituant la piste unique et de l'évolution dans le temps desdits déphasages instantanés (Δϕi), déterminer l'unicité, le dénombrement ou le caractère indénombrable des émissions non discriminées.

2. Dispositif radioélectrique selon la revendication 1, **caractérisé en ce que** le dispositif d'extraction (110) regroupe sous forme de plots de mesure les signaux reçus appartenant au même train de signaux.

3. Dispositif radioélectrique selon la revendication 1, **caractérisé en ce que** le dispositif d'extraction regroupe sous forme de plots de mesure les signaux reçus appartenant au même éclairement des antennes de réception (A1, A2, A3, A4) par les émetteurs.

4. Procédé de dénombrement d'un groupe d'émetteurs électromagnétiques par un dispositif radioélectrique de dénombrement d'émetteurs (V1, V2, V3, V4, V5, V6) électromagnétiques, selon l'une des revendications précédentes, le procédé comportant les étapes suivantes :
- la réception par les au moins deux antennes de réception (A1, A2, A3, A4) distantes formant une base interférométrique (BI) des signaux (s1, s2) émis par les émetteurs sous forme de trains de signaux,
- la fourniture par le récepteur radioélectrique (100) de goniométrie:
des mesures des paramètres primaires caractéristiques des signaux émis par les émetteurs, les dits paramètres primaires des signaux reçus étant choisis parmi le niveau du signal, la fréquence F, la modulation ou la direction,
des mesures de phase instantanée (ϕi) des signaux reçus par chacune des antennes de la base interférométrique,
- le regroupement sous forme des plots de mesure, des émissions discriminées par leurs paramètres primaires et présentant une même caractéristique, et des émissions non discriminées par le dispositif d'extraction (110),
- la fourniture par le dispositif de pistage des émissions des émetteurs, à partir des plots de mesure du dispositif d'extraction, des pistes correspondant aux émissions discriminées et d'un une piste unique pour les émissions non discriminées,
le procédé étant **caractérisé en ce qu'**il comporte en outre les étapes suivantes :
- le calcul des déphasages instantanés (Δϕi) entre les signaux reçus par chacune des antennes de la base interférométrique à partir des mesures des phases instantanées (ϕi) fournies par le récepteur radioélectrique (100),
- la discrimination des émissions non discriminées, à partir des plots de mesure constituant la piste unique et de l'évolution dans le temps desdits déphasages instantanés (Δϕi), la discrimination des émissions non discriminées comportant une étape d'analyse par un module de dénombrement (130) de la répartition et des évolutions des déphasages instantanés (Δϕi) fournis par le dispositif d'extraction (110) sous forme de plots de déphasage et de détermination, à partir des plots de mesure constituant la piste unique et de l'évolution dans le temps desdits déphasages instantanés (Δϕi), de l'unicité, du dénombrement ou du caractère indénombrable des émissions non discriminées.

## Patentansprüche

1. Radioelektrische Vorrichtung zum Zählen von elektromagnetischen Sendern (V1, V2, V3, V4, V5, V6), die Folgendes umfasst:
- wenigstens zwei ferne Empfangsantennen (A1, A2, A3, A4), die eine interferometrische Basis (BI) zum Erfassen von Signalen (s1, s2) bilden, die von den Sendern in Form von Signalfolgen gesendet werden;
- einen radioelektrischen Peilempfänger (100), der Folgendes bereitstellt:
Messwerte der primären Parameter, die für die von den Sendern gesendeten Signale charakteristisch sind, wobei die primären Parameter der empfangenen Signale aus dem Signalpegel, der Frequenz F, der Modulation und der Richtung ausgewählt sind;
Messwerte (ϕi) für die momentane Phase der von jeder Antenne der interferometrischen Basis empfangenen Signale;
- eine Extraktionsvorrichtung (110), die Sendungen, die nach ihren primären Parametern unterschieden werden und eine selbe Charakteristik haben, und nicht unterschiedene Sendungen in Form von Messpunkten gruppiert;
- eine Vorrichtung zum Verfolgen von Sendungen von Sendern, die auf der Basis der Messpunkte der Extraktionsvorrichtung Bahnen, die den unterschiedenen Sendungen entsprechen, und eine einzige Bahn für die nicht unterschiedenen Sendungen liefert,
**dadurch gekennzeichnet, dass** sie ferner Folgendes umfasst:
- Mittel zum Berechnen der momentanen Phasenverschiebungen (Δϕi) zwischen den von jeder Antenne der interferometrischen Basis empfangenen Signalen auf der Basis der von dem radioelektrischen Empfänger (100) gelieferten momentanen Phasenmesswerte (ϕi);
- Mittel zum Unterscheiden von nicht unterschiedenen Sendungen auf der Basis von Messpunkten, die die einzige Bahn (lp) bilden, und der Entwicklung der momentanen Phasenverschiebungen (Δϕi) im Laufe der Zeit, wobei die Mittel zum Unterscheiden von nicht unterschiedenen Sendungen ein Zählmodul (130) umfassen, konfiguriert zum Analysieren der Verteilung und der Entwicklungen der momentanen Phasenverschiebungen (Δϕi), geliefert von der Extraktionsvorrichtung (110) in Form von Phasenverschiebungspunkten, und, auf der Basis von Messpunkten, die die einzige Spur bilden, und der Entwicklung der momentanen Phasenverschiebungen (Δϕi) im Laufe der Zeit, zum Ermitteln der Einzigartigkeit, der Zahl oder des nicht zählbaren Charakters der nicht unterschiedenen Sendungen.

2. Radioelektrische Vorrichtung nach Anspruch 1, **dadurch gekennzeichnet, dass** die Extraktionsvorrichtung (110) die empfangenen Signale, die zur selben Signalfolge gehören, in Form von Messpunkten gruppiert.

3. Radioelektrische Vorrichtung nach Anspruch 1, **dadurch gekennzeichnet, dass** die Extraktionsvorrichtung die zur selben Beleuchtung der Empfangsantennen (A1, A2, A3, A4) durch die Sender gehörenden empfangenen Signale in Form von Messpunkten gruppiert.

4. Verfahren zum Zählen einer Gruppe von elektromagnetischen Sendern mittels einer radioelektrischen Vorrichtung zum Zählen von elektromagnetischen Sendern (V1, V2, V3, V4, V5, V6) nach einem der vorherigen Ansprüche, wobei das Verfahren die folgenden Schritte beinhaltet:
- Empfangen, über die wenigstens zwei fernen Empfangsantennen (A1, A2, A3, A4), die eine interferometrische Basis (BI) bilden, von Signalen (s1, s2), die von den Sendern in Form von Signalfolgen gesendet werden;
- Bereitstellen, über den radioelektrischen Peilempfänger (100):
von Messwerten der primären Parameter, die für die von den Sendern gesendeten Signale charakteristisch sind, wobei die primären Parameter der empfangenen Signale aus dem Signalpegel, der Frequenz F, der Modulation und der Richtung ausgewählt sind;
von momentanen Phasenmesswerten (ϕi) der von jeder Antenne der interferometrischen Basis empfangenen Signale;
- Gruppieren durch die Extraktionsvorrichtung (110), in Form von Messpunkten, von Sendungen, die gemäß ihren primären Parametern unterschieden werden und eine selbe Charakteristik haben, und von Sendungen, die nicht unterschieden werden;
- Liefern, durch die Vorrichtung zum Verfolgen der Sendungen von Sendern, auf der Basis der Messpunkte der Extraktionsvorrichtung, von Bahnen, die den unterschiedenen Sendungen entsprechen, und einer einzigen Bahn für die nicht unterschiedenen Sendungen,
wobei das Verfahren **dadurch gekennzeichnet ist, dass** es ferner die folgenden Schritte beinhaltet:
- Berechnen von momentanen Phasenverschiebungen (Δϕi) zwischen den von jeder Antenne der interferometrischen Basis empfangenen Signalen auf der Basis der von dem radioelektrischen Empfänger (100) zugeführten momentanen Phasenmesswerte (ϕi);
- Unterscheiden der nicht unterschiedenen Sendungen auf der Basis der Messpunkte, die die einzige Bahn bilden, und der Entwicklung der momentanen Phasenverschiebungen (Δϕi) im Laufe der Zeit, wobei die Unterscheidung der nicht unterschiedenen Sendungen den Schritt des Analysierens, mit einem Zählmodul (130), der Verteilung und der Entwicklungen der momentanen Phasenverschiebungen (Δϕi), geliefert von der Extraktionsvorrichtung (110) in Form von Phasenverschiebungspunkten, und des Ermittelns, auf der Basis der Messpunkte, die die einzige Bahn bilden, und der Entwicklung der momentanen Phasenverschiebungen (Δϕi) im Laufe der Zeit, der Einzigartigkeit, der Zahl oder des nicht zählbaren Charakters der nicht unterschiedenen Sendungen beinhaltet.

## Claims

1. A radioelectric device for counting electromagnetic transmitters (V1, V2, V3, V4, V5, V6), comprising:
- at least two remote reception antennae (A1, A2, A3, A4) forming an interferometric base (BI) for detecting signals (s1, s2) transmitted by said transmitters in the form of signal trains;
- a radioelectric goniometry receiver (100) providing:
measurements of the primary parameters that are characteristic of the signals transmitted by said transmitters, said primary parameters of the received signals being selected from the signal level, the frequency F, the modulation and the direction;
instantaneous phase measurements (ϕi) of the signals received by each antenna of said interferometric base;
- an extraction device (110) grouping, in the form of measurement points, transmissions discriminated by their primary parameters and having the same characteristic and the non-discriminated transmissions;
- a device for tracking transmissions from transmitters supplying, on the basis of the measurement points of said extraction device, tracks corresponding to the discriminated transmissions and a single track for the non-discriminated transmissions,
**characterised in that** it further comprises:
- means for computing instantaneous phase-shifts (Δϕi) between the signals received by each antenna of said interferometric base on the basis of the instantaneous phase measurements (ϕi) supplied by said radioelectric receiver (100);
- means for discriminating non-discriminated transmissions on the basis of the measurement points forming said single track (1p) and the development over time of said instantaneous phase-shifts (Δϕi), said means for discriminating the non-discriminated transmissions comprising a counting module (130) configured to analyse the distribution and the developments of the instantaneous phase-shifts (Δϕi) supplied by said extraction device (110) in the form of phase-shift points and, on the basis of the measurement points forming said single track and the development over time of said instantaneous phase-shifts (Δϕi), determining the uniqueness, the count or the uncountable character of the non-discriminated transmissions.

2. The radioelectric device according to claim 1, **characterised in that** said extraction device (110) groups, in the form of measurement points, the received signals that belong to the same signal train.

3. The radioelectric device according to claim 1, **characterised in that** said extraction device groups, in the form of measurement points, the received signals that are part of the same illumination of said reception antennae (A1, A2, A3, A4) by said transmitters.

4. A method for counting a group of electromagnetic transmitters using a radioelectric device for counting electromagnetic transmitters (V1, V2, V3, V4, V5, V6) according to any one of the preceding claims, said method comprising the following steps:
- receiving, via the at least two remote reception antennae (A1, A2, A3, A4) forming an interferometric base (BI), signals (s1, s2) transmitted by said transmitters in the form of signal trains;
- providing, via said radioelectric goniometry receiver (100):
measurements of the primary parameters that are characteristic of the signals transmitted by said transmitters, said primary parameters of the received signals being selected from the signal level, the frequency F, the modulation and the direction;
instantaneous phase measurements (ϕi) of the signals received by each antenna of said interferometric base;
- grouping by said extraction device (110), in the form of measurement points, transmissions discriminated by their primary parameters and having the same characteristic and non-discriminated transmissions;
- supplying, via said device for tracking transmissions from transmitters, on the basis of the measurement points of said extraction device, tracks corresponding to the discriminated transmissions and a single track for the non-discriminated transmissions,
said method being **characterised in that** it further comprises the following steps:
- computing instantaneous phase-shifts (Δϕi) between the signals received by each antenna of said interferometric base on the basis of the instantaneous phase measurements (ϕi) supplied by said radioelectric receiver (100);
- discriminating non-discriminated transmissions on the basis of the measurement points forming said single track and the development over time of said instantaneous phase-shifts (Δϕi), said discrimination of the non-discriminated transmissions comprising a step of analysing, using a counting module (130), the distribution and the developments of the instantaneous phase-shifts (Δϕi) supplied by said extraction device (110) in the form of phase-shift points and of determining, on the basis of measurement points forming said single track and the development over time of said instantaneous phase-shifts (Δϕi), the uniqueness, the count or the uncountable character of the non-discriminated transmissions.
